# EUROPEAN PATENT APPLICATION

(11) **EP 2 120 204 A1**
(43) Date of publication of application: **18.11.2009**
(21) Application number: 09159771.6
(22) Date of filing: 08.05.2009
(51) Int. Cl.: G06Q 30/00

(54) **Method and system to quantify performance of a power generating system**

(30) Priority: 12.05.2008 US 118807
(71) Applicant: General Electric Company, Schenectady, NY 12345 (US)
(72) Inventor: Sarkar, Abhinanda, 560066 Karnataka (IN); Gujjar, Vineel Chandrakanth, 560017, Bangalore, Karnataka (IN); Anbarasu, Arungalai, 560037, Bangalore, Karnataka (IN)
(74) Representative: Bedford, Grant Richard

(57) **Abstract**

A method (110) for quantifying performance of a power generating system (34) is provided. The method includes empirically determining (112) an actual relationship between input of an uncontrollable resource and power output of the power generating system. The method also includes determining (114) a desired relationship between input of an uncontrollable resource and power output of the power generating system. The method further includes comparing (116) the actual relationship to the desired relationship. The method also includes determining (118) a plurality of financial parameters for the power generating system based on the comparison.

## Description

The present invention relates generally to quantifying performance of a power generating system, and more specifically to determining a financial product for a power generating system with an uncontrollable input source.

Certain financial products are known or have been proposed for power generating systems, such as supply contracts between a buyer and a seller of electricity. Generally, a financial product is determined based upon a number of parameters that may affect, directly or indirectly, performance of the system. For example, the financial product for a controllable input energy source such as gas and coal may be based on an availability of a turbine driven by steam generated by combustion of those fuels. The financial product may specify, for example, an availability number of about 96 % for a gas turbine. Accordingly, if the gas turbine is available for more than 96% of the time, then an appropriate bonus may be awarded to an owner or an operator of a power plant. Similarly, if the gas turbine is available for less than 96% of time then an appropriate penalty may be applied. More recent financial products focus on external parameters such as emissions or noise.

In case of power generation facilities with uncontrollable input energy sources such as, wind, solar energy, wave energy, and so forth, such financial products based only on availability may not be desirable, since the turbines may not operate continuously at rated power. For example, a 1.5 MW turbine may output only 1 MW at a wind speed less than a rated wind speed and may have to be disconnected from a grid if the wind speed is higher than a threshold wind speed. In such cases, variations in power generation capabilities over time, based upon the power curve for the resource (e.g., a curve relating power output to wind speed in the case of a wind turbine) are non-trivial. Such resources thus may be incapable of meeting the stringent requirements of "availability" type financial arrangements of more predictable and controllable resources. Similarly, factors such as lifetime, efficiency, and changes in environmental conditions, that may increase financial risk, need to be considered in determining the financial product that will work best in managing productivity of the resource.

Therefore, it would be desirable to determine a financial product that would address the foregoing issues.

In accordance with one exemplary embodiment of the present invention, a method for quantifying performance of a power generating system is provided. The method includes empirically determining an actual relationship between input of an uncontrollable resource and power output of the power generating system, determining a desired relationship between input of an uncontrollable resource and power output of the power generating system. The method further includes comparing the actual relationship to the desired relationship and determining a plurality of financial parameters for the power generating system based on the comparison.

In accordance with another embodiment of the present invention, a system for evaluating a power generating system is provided. The system includes at least one sensor configured to measure a plurality of input parameters and output power of the power generating system, the input parameters including a parameter representative of an uncontrollable resource. The system further includes a processing circuitry configured to compare an empirically determined actual relationship between input of the uncontrollable resource and power output of the power generating system to a desired relationship therebetween; and to determine a financial parameter based upon the comparison.

In accordance with yet another embodiment of the present invention, a method of monitoring a financial product designed for a power generating system is provided. The method comprises tracking fluctuation in one or more operating parameters of a power generating system that converts and uncontrollable natural resource to power output, the parameters including input of the uncontrollable natural resource; and correcting the financial product based upon the tracking.

In accordance with another embodiment of the present invention, a metering card for a power generating system is provided. The metering card is configured to maintain a database of a bonus or a penalty. The metering card is further configured to calculate a consolidated bonus or penalty based upon the database at a pre-determined interval.

Various features, aspects, and advantages of the present invention will become better understood when the following detailed description is read with reference to the accompanying drawings in which like characters represent like parts throughout the drawings, wherein:
FIG. 1 is a diagrammatical representation of an uncontrollable input power generating system in the form of a wind farm including a number of wind turbines;
FIG. 2 is a diagrammatical representation of a wind farm generating system employing sensors to collect measurement data for input parameters, in accordance with an embodiment of the present invention;
FIG. 3 is an exemplary power curve of a wind turbine showing the relationship between wind speed and power output of the turbine for use in evaluating performance of the generating system in accordance with an embodiment of the present invention;
FIG. 4 is another exemplary power curve of a wind farm illustrating power curve band for determining bonus cum penalty; and
FIG. 5 is a flow chart representing steps in an exemplary method of quantifying the performance of a power generating system based on a power curve or similar relationship, in accordance with an embodiment of the present invention.
FIG. 6 is a flow chart representing steps in an exemplary method of monitoring a financial product designed for a power generating system.

As discussed in detail below, various embodiments of the present technique provide a method and a system to quantify performance of a power generating system. The technique also provides a financial product for power generating systems based on current performance. Although the present discussion focuses on wind power generating systems, it is applicable to any power generating system, such as a solar power generating systems, with uncontrollable input energy sources.

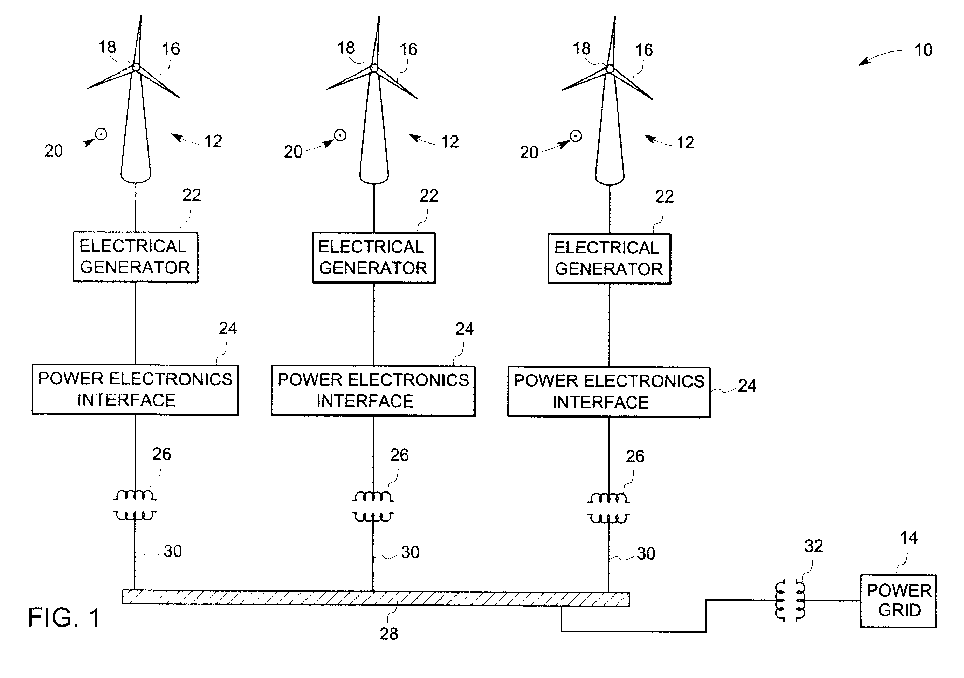

Referring now to the drawings, FIG. 1 is a diagrammatical representation of an uncontrollable input power generating system in the form of a wind farm 10 including a number of wind turbines 12 operable to supply electrical power to a power grid 14. The power grid 14 also receives power from other power generation units such as thermal, hydroelectric or nuclear power stations. This is desirable as wind is intermittent and cannot be controlled, and so the power generated by wind farms is also intermittent and uncontrollable (i.e., cannot be regulated at will by the simple addition of fuel or the control of fuel consumption).

Wind passing over blades 16 of the wind turbines 12 rotates a turbine rotor 18 about an axis 20 perpendicular to a plane of FIG. 1. An electrical generator 22 coupled to the turbine rotor 18 produces electrical power in response to the rotation. A power electronics interface 24 is further coupled to the electrical generator 22 to ensure efficient operation. In a particular embodiment, the generators 22 produce power at a low voltage such as, for example, 600 Volts.

Turbine transformers 26 coupled to the power electronics interface step up voltages of the generator 22. The electrical power is then further transmitted to a medium voltage distribution network 28. An electrical feeder 30 collects power from the turbine transformer 26 and transmits it to the medium voltage distribution network 28. In certain embodiments, switching devices (not shown) are generally employed to shut down power generation by one or more of the wind turbine generators during high wind conditions. A power station transformer 32 steps up voltage from the medium voltage distribution network and transmits it to the power grid 14. As will be appreciated by those skilled in the art, other components and circuitry may, of course, be provided for conditioning power produced by the generator, synchronizing phases of power to the grid, controlling power factor, and so forth.

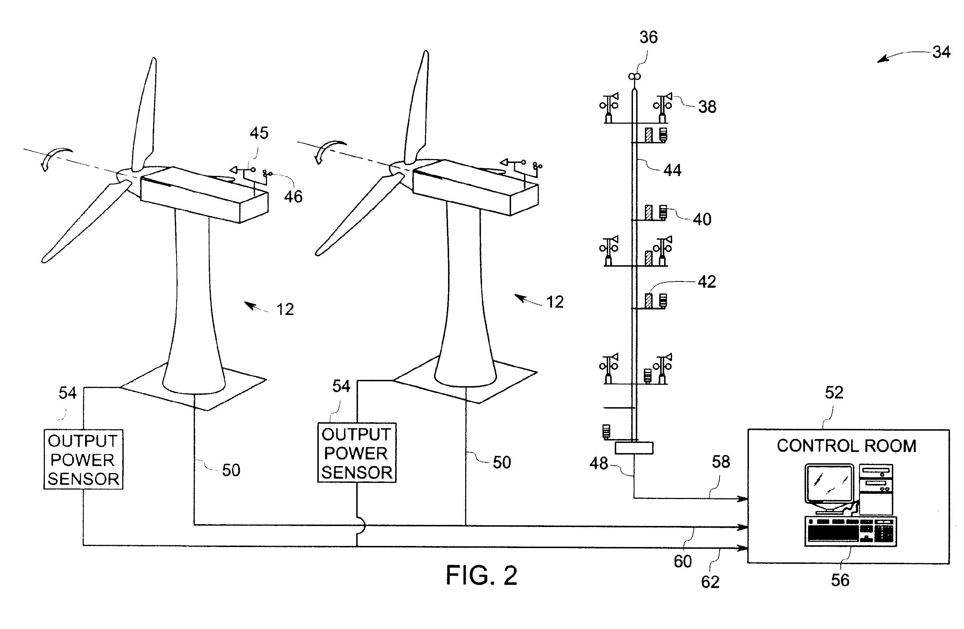

FIG. 2 is a diagrammatic illustration of an exemplary wind power generating system 34 employing at least one sensor. In the illustrated embodiment, the wind power generating system 34 includes multiple sensors 36, 38, 40, 42, mounted on a metrological mast 44 that measure multiple input parameters for all the turbines 12, representative of an uncontrollable resource such as wind. In one embodiment, the sensor 36 measures wind speed, while the sensor 38 measures wind direction. For example, sensor 36 may be a wind farm anemometer, although various types of such instruments, and various other instruments may be utilized. In another embodiment, the sensor 38 is a wind farm vane. Furthermore, the sensor 40 may measure temperature at the wind farm, and the sensor 42 may measure air humidity. In an exemplary embodiment, sensors 45, 46 are employed on each of the turbines to measure wind speed and wind direction respectively. An air pressure sensor (not shown), an air density sensor (not shown) and a temperature sensor 40 may be mounted on the meteorological mast, although such parameters may not play a significant role in wind energy production. Humidity readings from sensor 42 may also help, for example, to assess the potential of freezing at the wind farm.

Sensors 36 and 38 control operation of the wind turbine via a wind turbine controller (not shown). In one embodiment, controlling operation of the wind turbine includes starting and stopping of the wind turbine. In yet another embodiment, controlling operation of the wind turbine includes aligning the turbine rotor in the wind direction. Signals from sensors 36, 38, 40, 42 disposed on the meteorological mast and from sensors 45, 46 are transmitted via cables 48 and 50 respectively to a control room 52. One or more output sensors 54 measure output power from each of the turbines 12, which is further transmitted to the control room 52. As will be appreciated by those skilled in the art, such sensors may measure, for example, current and voltage, or may be included in a power monitor (considered for the present purposes as sensor 54) that measures and logs power output directly based upon current and voltage measurements.

Processing circuitry 56 in the control room 52 processes the input signals 58, 60 representing the respective input parameters from the input sensors and the output power signal 62 from the output power sensors. In particular, processing circuitry 56 determines an actual relationship between the input parameters 58, 60 and the output power 62. In one embodiment, this relationship is used to establish a power curve relating the input parameters to output of each generator, a group of generators, or the entire wind farm. The determined relationship is further compared to a desired relationship, such as the ideal, model, and reference or baseline output obtainable at the detected input parameter conditions. In one embodiment, the desired relationship is a relationship between input parameters and output parameters agreed in the contract by a buyer and a seller of the electricity.

The processing circuitry 56 further determines a financial parameter based upon the comparison. In a particular embodiment, the financial parameter includes bonus or a penalty depending upon a difference between the actual relationship and the desired relationship. In another embodiment, the bonus or penalty is attributed to deviations not caused by natural deviations in the input parameters. In yet another embodiment, the financial parameter comprises a warranty or an insurance plan, wherein an upfront fee or a premium based on difference between the actual relationship and the desired relationship is paid by the buyer of electricity. A monetary repayment or a non-monetary commitment such as, for example, to provide equivalent power, may be provided to the buyer based upon the difference. These financial parameters are called as financial products. In one embodiment, the processing circuitry generates a statement or a bill. In an exemplary embodiment, a metering card may be employed with the financial product, wherein the metering card maintains a database of the bonus or penalty and further calculates a consolidated bonus or penalty based upon the database at a pre-determined interval of time.

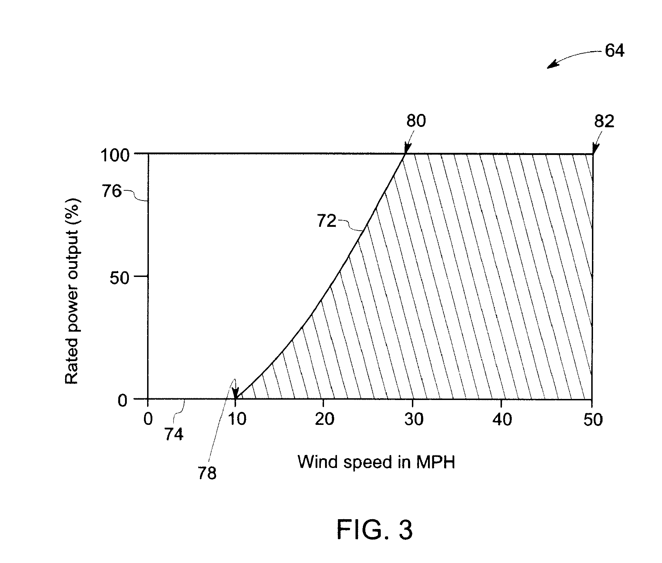

FIG. 3 is an exemplary graphical representation 64 of a power curve of a wind turbine 12 of the type discussed above. The power output of the wind turbine depends in large part upon speed of the wind passing through blades of the turbine. The relationship between wind speed and the turbine output power is illustrated by power curve 72. The horizontal axis 74 represents wind speed and the vertical axis 76 represents rated wind turbine power output (in this case as a percentage of the full output capability of the system).

Power curve measurement is important from a point of view of a seller of electricity generated by the wind turbine. It provides an easy method to calculate the annual energy production of the turbine. The power curve, in turn, is often turbine-specific as well as site-specific. A "cut-in wind speed" 78 is a wind speed at which the wind turbine starts rotating and generates electrical power. In the exemplary power curve 72, the cut-in wind speed is approximately 10 MPH (16 KPH). The wind speed at which wind turbine generates rated power is called as "rated wind speed" represented by reference numeral 80. At this speed power conversion efficiency is generally at a maximum. Above the rated wind speed 80, power output of the wind turbine is maintained at a constant level (rated power output) by a mechanical controller or by an electrical controller. The wind turbine is programmed to shut down at a "cut-out wind speed" 82 to avoid damage to the turbine 12 and the generator 22. In the exemplary power curve 72, the cut-out wind speed 82 is 50 MPH (80 KPH).

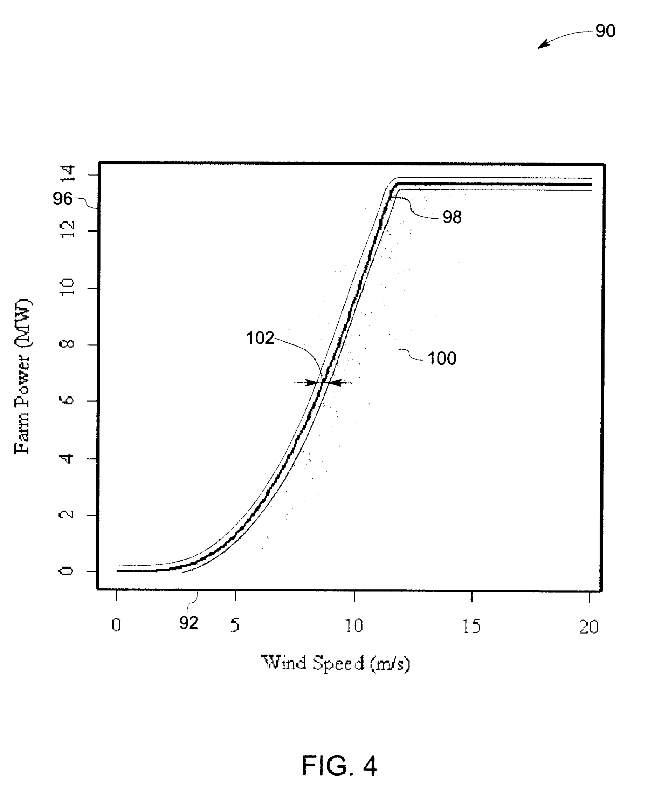

FIG. 4 is a graphical representation 90 of power curve for a wind farm generated by data collected from different wind farm sensors. Horizontal axis 92 represents wind speed in m/s and vertical axis 96 represents wind farm power output in MW. Power curve 98 represents a power curve agreed in the contract by both buyer and seller of the electricity, which may also be referred to as a desired power curve. Data points 100 represents an actual or measured output power, which is compared to desired output power. A bonus may be applied to a seller's benefit in case the measured output power exceeds the desired output power beyond a tolerance range 102. Similarly, an appropriate penalty may be applied to the seller (a cost) when the measured output power is less than the desired output power, again extended, where appropriate to a range 102. As will be appreciated by those skilled in the art, such determinations may be made based upon performance over a set duration or sampling period, and filtering techniques, such as low pass filtering, may be applied to determine the actual values of input parameters, the actual output power, and other factors utilized in making the comparison to the desired relationship.

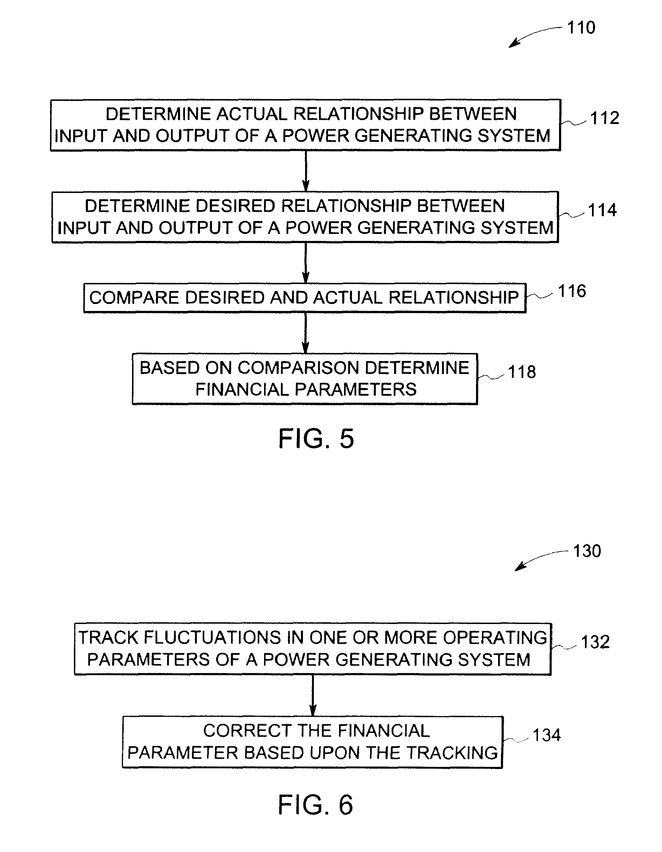

FIG. 5 is a flow chart representing steps in an exemplary method 110 of quantifying the performance of a power generating system. The method 110 includes empirically determining an actual relationship between input parameters or conditions of an uncontrollable resource and power output of the power generating system, as indicated by step 112. In a particular embodiment, determining an actual relationship includes measuring an overall output power with respect to multiple input parameters of the power generating system, and performing such analysis at a variety of different combinations of the input parameters considered. In an exemplary embodiment, the input parameters include wind speed, wind direction, temperature and humidity of air for a wind power generating system.

A desired relationship between input of an uncontrollable resource parameters and power output of the power generating system is determined in step 114. In a particular embodiment, determining desired relationship includes determining desired power curve for finalizing the contract between the buyer and the seller of the electricity. A number of techniques may be used for such determinations, such as various curve fitting algorithms. It should also be noted that the relationship may be multi-dimensional, depending upon the factors agreed upon the by buyer and seller, and upon those factors or parameters that most affect the production of power. It should also be noted that the power curve (or more generally, the desired relationship) might be established during a commissioning phase of operation of the system, or during normal operation. Moreover, because certain combinations of input parameters may not be encountered as often as others, the relationship may be adjusted or updated as such new combinations of conditions occur.

Once this desired relationship has been established (and agreed upon), during normal operation, the actual relationship is compared to the desired relationship in step 116. In a particular embodiment this comparison includes comparing actual power output of a power generating system with the desired power output and determining whether the actual power exceeds or falls short of the desired power beyond a range. Further; multiple financial parameters for the power generating system are determined based on the comparison in step 118. In one embodiment, determining the financial parameters might include applying a bonus or a penalty depending upon a difference between the actual relationship and the desired relationship. In another embodiment, determining the financial parameters might include determining a monetary payment or an equivalent power depending upon a difference between the actual relationship and the desired relationship. These financial parameters may be part of the agreement or financial product established between the buyer and seller. It should be noted that certain aspects of the present invention also contemplate such financial products that are offered or established by third parties or even by markets that do not directly include the buyer and/or seller of power. Thus, the product may be similar to a hedge contract, insurance contract, supply/requirements contract, and so forth.

FIG. 6 is a flow chart representing steps in an exemplary method 130 of monitoring a financial product designed for a power generating system of the type described above. The method 130 includes tracking fluctuations in one or more operating parameters of a power generating system, as indicated in step 132, that converts an uncontrollable natural resource to power output, wherein the parameters include input of the uncontrollable natural resource. In an exemplary embodiment, a fluctuation in cost of power production is tracked. In another embodiment, changes in environmental conditions are monitored. Changes in environmental conditions may include changes in average temperature or changes in humidity at the wind farm.

The financial product may be corrected based upon such tracking, as indicated in step 134. In an exemplary embodiment, correcting the financial product includes adjusting a bonus or adjusting a penalty. In another embodiment, an amount of power to be provided in case of deficiency is adjusted. In one embodiment, value at risk for the seller of the electricity is adjusted. The term 'value at risk' as used herein, is a measure of financial risk for the seller of electricity. In yet another embodiment, an empirically determined actual relationship between input of the uncontrollable natural resource and power output of the power generating system is compared to a desired relationship therebetween as discussed above. In one exemplary embodiment, the empirically determined actual relationship between input of the uncontrollable natural resource and power output of the power generating system is determined during actual operation of the system, as also discussed above.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are now defined by the following numbered clauses:
1. A method for quantifying performance of a power generating system comprising:
   empirically determining an actual relationship between input of an uncontrollable resource and power output of the power generating system;
   determining a desired relationship between input of an uncontrollable resource and power output of the power generating system;
   comparing the actual relationship to the desired relationship; and
   determining a plurality of financial parameters for the power generating system based on the comparison.
2. The method of clause 1, wherein determining the actual relationship comprises measuring an overall output power with respect to a plurality of input parameters of the power generating system.
3. The method of any preceding clause, wherein the input parameters comprise wind speed, air density, wind direction, temperature and humidity of air for a wind power generating system.
4. The method of any preceding clause, wherein determining the plurality of financial parameters comprises applying a bonus or a penalty depending upon a difference between the actual relationship and the desired relationship.
5. The method of any preceding clause, wherein determining the plurality of financial parameters comprises determining a monetary payment or an equivalent power depending upon a difference between the actual relationship and the desired relationship.
6. A system for evaluating a power generating system comprising:
   at least one sensor configured to measure a plurality of input parameters and output power of the power generating system, the input parameters including a parameter representative of an uncontrollable resource; and
   processing circuitry configured to:
      compare an empirically determined actual relationship between input of the uncontrollable resource and power output of the power generating system to a desired relationship therebetween; and
      determine a financial parameter based upon the comparison.
7. The system of clause 6, wherein the actual relationship includes a power curve relating the uncontrollable resource to actual power output of the power generating system.
8. The system of clause 6 or 7, wherein the power generating system comprises a wind power generating system or a solar power generating system or a hydro power generating system.
9. The system of any of clauses 6 to 8, wherein the input parameters comprise wind speed, air density, wind direction, temperature and humidity of air for a wind power generating system.
10. The system of any of clauses 6 to 9, wherein the financial parameter comprises a bonus or a penalty depending upon a difference between the actual relationship and the desired relationship.
11. The system of any of clauses 6 to 10, wherein the bonus or penalty is attributed to deviations not caused by natural deviations in the input parameters.
12. The system of any of clauses 6 to 11, wherein the financial parameter comprises a monetary payment or an equivalent power depending upon a difference between the actual relationship and the desired relationship.
13. The system of any of clauses 6 to 12, wherein the processing circuitry is further configured to generate a statement or a bill.
14. A method of monitoring a financial product designed for a power generating system comprising:
   tracking fluctuation in one or more operating parameters of a power generating system that converts an uncontrollable natural resource to power output, the parameters including input of the uncontrollable natural resource; and
   correcting the financial product based upon the tracking.
15. The method of clause 14, wherein the tracking comprises tracking fluctuation in cost of power production.
16. The method of clauses 14 to 15, wherein the tracking comprises monitoring change in environmental conditions.
17. The method of any of clauses 14 to 16, wherein correcting the financial product comprises adjusting a bonus.
18. The method of any of clauses 14 to 17, wherein correcting the financial product comprises adjusting a penalty.
19. The method of any of clauses 14 to 18, wherein correcting the financial product comprises adjusting value at risk for a seller of electricity.
20. The method of any of clauses 14 to 19, wherein tracking fluctuation comprises comparing an empirically determined actual relationship between input of the uncontrollable natural resource and power output of the power generating system to a desired relationship therebetween.
21. The method of any of clauses 14 to 20, further comprising determining the empirically determined actual relationship between input of the uncontrollable natural resource and power output of the power generating system during actual operation of the system.
22. A metering card for a power generating system, configured to:
   maintain a database of a bonus or a penalty; and
   calculate a consolidated bonus or penalty based upon the database at a pre-determined interval.

## Claims

1. A method (110) for quantifying performance of a power generating system (34) comprising:
empirically determining (112) an actual relationship between input of an uncontrollable resource and power output of the power generating system;
determining (114) a desired relationship between input of an uncontrollable resource and power output of the power generating system;
comparing (116) the actual relationship to the desired relationship; and
determining (118) a plurality of financial parameters for the power generating system based on the comparison.

2. The method of claim 1, wherein determining (116) the actual relationship comprises measuring an overall output power with respect to a plurality of input parameters of the power generating system.

3. The method of any preceding claim, wherein determining (118) the plurality of financial parameters comprises applying a bonus or a penalty depending upon a difference between the actual relationship and the desired relationship.

4. The method of any preceding claim, wherein determining (118) the plurality of financial parameters comprises determining a monetary payment or an equivalent power depending upon a difference between the actual relationship and the desired relationship.

5. A system for evaluating a power generating system (10) comprising:
at least one sensor (54) configured to measure a plurality of input parameters and output power of the power generating system, the input parameters including a parameter representative of an uncontrollable resource; and
processing circuitry (56) configured to:
compare an empirically determined actual relationship between input of the uncontrollable resource and power output of the power generating system to a desired relationship therebetween; and
determine a financial parameter based upon the comparison.

6. The system of claim 5, wherein the actual relationship includes a power curve relating the uncontrollable resource to actual power output of the power generating system (10).

7. The system of claim 5 or claim 6, wherein the financial parameter comprises a bonus or a penalty depending upon a difference between the actual relationship and the desired relationship.

8. The system of any of claims 5 to 7, wherein the financial parameter comprises a monetary payment or an equivalent power depending upon a difference between the actual relationship and the desired relationship.

9. A method (130) of monitoring a financial product designed for a power generating system comprising:
tracking (132) fluctuation in one or more operating parameters of a power generating system that converts an uncontrollable natural resource to power output, the parameters including input of the uncontrollable natural resource; and
correcting (134) the financial product based upon the tracking.

10. A metering card for a power generating system (34), configured to:
maintain a database of a bonus or a penalty; and
calculate a consolidated bonus or penalty based upon the database at a pre-determined interval.
